# EUROPÄISCHE PATENTSCHRIFT

(11) **EP 0 559 688 B1**
(45) Veröffentlichungstag und Bekanntmachung des Hinweises auf die Patenterteilung: **28.02.1996**
(21) Anmeldenummer: 91920308.3
(22) Anmeldetag: 18.11.1991
(51) Int. Cl.: A01N 37/34, A01N 43/50, A01N 25/02, A01N 25/22, C09D 5/14

(54) **FUNGIZIDE WIRKSTOFFLÖSUNG**
FUNGICIDAL ACTIVE AGENT SOLUTION
SOLUTION D'AGENTS FONGICIDES

(30) Priorität: 26.11.1990 DE 4037504
(43) Veröffentlichungstag der Anmeldung: 15.09.1993
(73) Patentinhaber: Henkel Kommanditgesellschaft auf Aktien, D-40191 Düsseldorf (DE)
(72) Erfinder: LEINEN, Hans-Theo, D-4000 Düsseldorf (DE); SCHACHTLBAUER, Gerhard, D-4000 Düsseldorf 13 (DE); GRESS, Wolfgang, D-5600 Wuppertal-Elberfeld (DE)
(86) Internationale Anmeldenummer: EP9102171
(87) Internationale Veröffentlichungsnummer: WO9209201

(56) Entgegenhaltungen:
- EP-A- 0 351 195
- WO-A-79/00654
- WO-A-86/06066
- DE-A- 3 703 389
- US-A- 3 948 636
- STN International,File CA, STN accession n 94(23):186718j, Boltaev,: "Protection of desert fodder plants from steganosporiosis", Zashch. Kormovykh Kult.Vred., Bolezn. Sornyakov, 1980, 91-2

## Beschreibung

Die Erfindung betrifft eine fungizide Wirkstofflösung mit einem Gehalt an 2,4,5,6-Tetrachloroisophthalodinitril und 1,3-Dimethyl-1,2-imidazolidinon, ein Verfahren zu ihrer Herstellung sowie ihre Verwendung als Fungizid in Farben und Lacken.

An lösemittelhaltige und wasserbasierende Farben und Lacke für den Anstrich von freibewitterten Flächen oder solchen, die permanent oder gelegentlich mit Wasser in Berührung kommen, werden höhere Ansprüche als an Produkte gestellt, die ausschließlich in Trockenbereichen Einsatz finden. Neben naheliegenden Eigenschaften, wie etwa Deckkraft, Ergiebigkeit oder leichte Verarbeitbarkeit, werden an Farben und Lacke, die für Feuchtbereiche in Betracht kommen, weitere Ansprüche vor allem im Hinblick auf ihre konservierenden Fähigkeiten gestellt. Insbesondere sollen derartige Produkte sicherstellen, daß die mit ihnen durchgeführten Anstriche über einen ausreichenden Zeitraum vor dem Befall von Pilzen geschützt sind.

Als Fungizid, das Farb- und Lackanstriche besonders wirkungsvoll vor dem Befall durch Pilze, insbesondere Schimmelpilze, schützt, hat sich das 2,4,5,6-Tetrachloroisophthalodintril (TCIPDN) bewährt. TCIPDN weist jedoch den Nachteil auf, daß es in Wasser nicht und in wassermischbaren organischen Lösemitteln für technische Anwendungen nur unzureichend löslich ist; zudem besteht bei einer Reihe von typischen wassermischbaren organischen Lösemitteln, wie beispielsweise Aceton, die Gefahr unerwünschter Reaktionen zwischen den Rezepturbestandteilen und dem Solvens.

Dies führt dazu, daß lösemittelhaltigen Farben und Lacken TCIPDN lediglich in Form des reinen Stoffs zudosiert werden kann, was mit Problemen beim Abfüllen und Dosieren verbunden ist, während für wasserbasierende Produkte nur wäßrige Wirkstoff-Dispersionen in Betracht kommen. Für einen Anwendungszweck muß das Fungizid somit in zwei unterschiedlichen Anbietungsformen hergestellt werden.

Der Erfindung lag somit die Aufgabe zugrunde, für das TCIPDN eine Anbietungsform zu entwickeln, die für eine Einarbeitung sowohl in lösemittelhaltigen als auch in wasserbasierenden Farben und Lacken geeignet ist.

Gegenstand der Erfindung ist eine fungizide Wirkstofflösung, enthaltend
5 bis 12 Gew.-% 2,4,5,6-Tetrachloroisophthalodinitril und
88 bis 95 Gew.-% 1,3-Dimethyl-1,2-imidazolidinon.

Die Erfindung beruht auf der Erkenntnis, daß Mischungen von TCIPDN und 1,3-Dimethyl-1,2-imidazolidinon (DMI) innerhalb der genannten Grenzen klare Lösungen darstellen, die ohne Schlierenbildung oder Sedimentieren nicht nur in lösemittelhaltige, sondern auch in wasserbasierende Farben und Lacke eingerührt werden können. Überraschenderweise wurde ferner festgestellt, daß die erfindungsgemäßen fungiziden Wirkstofflösungen auch bei niedrigen Temperaturen stabil sind, was einen wichtigen Vorteil im Hinblick auf ihre Lagerung darstellt.

### 2,4,5,6-Tetrachloroisophthalodinitril (I)

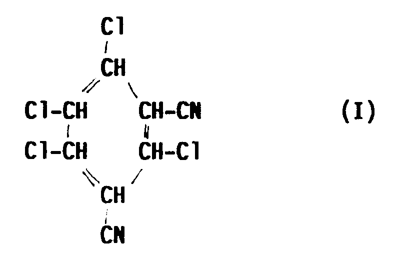

stellt einen bekannten Stoff dar und kann nach den einschlägigen Methoden der präparativen organischen Chemie erhalten werden. Ein Verfahren zu seiner Herstellung besteht beispielsweise darin, Isophthalsäuredinitril in Gegenwart von Stickstoff mit Chlor umzusetzen **[US 38 16 505, DE-A-23 39 791, DE-A-23 51 947].**

### Auch 1,3-Dimethyl-2-imidazolidinon (II)

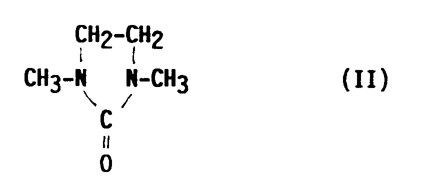

stellt eine bekannte Substanz dar, die nach den üblichen Methoden der präparativen organischen Chemie zugänglich ist **[Beilsteins Handbuch der organischen Chemie, Springer-Verlag, Berlin E III/IV 24, Syst.-Nr. 3557/H3].**

Ein weiterer Gegenstand der Erfindung betrifft ein Verfahren zur Herstellung einer fungiziden Wirkstofflösung, das sich dadurch auszeichnet, daß man 5 bis 12 Gew.-% 2,4,5,6-Tetrachloroisophthalodinitril in 88 bis 95 Gew.-% 1,3-Dimethyl-1,2-imidazolidinon löst. Die Herstellung der Mischung kann bei Raumtemperatur auf rein mechanischem Wege, beispielsweise durch Verrühren erfolgen; eine chemische Reaktion findet nicht statt. Fungizide Wirkstofflösungen, die das TCIPDN in Konzentrationen von 10 bis 12 Gew.-% und das DMI in Konzentrationen von 88 bis 90 Gew.-% enthalten, sind bevorzugt.

Die erfindungsgemäßen Wirkstofflösungen zeigen fungizide Eigenschaften. Ein weiterer Gegenstand der Erfindung betrifft daher die Verwendung von Wirkstofflösungen enthaltend 5 bis 12 Gew.-% 2,4, 5,6-Tetrachloroisophthalodinitril und 88 bis 95 Gew.-% 1,3-Dimethyl-1,2-imidazolidinon als Fungizid zum Schutz von Farb- oder Lackanstrichen vor Pilzbefall. Die Wirkstofflösungen eignen sich ebenfalls zum Schutz von Produkten aus Holz, Papier, Textil oder Leder. Sie können neben den genannten Stoffen weitere übliche Zusätze, beispielsweise UV-Stabilisatoren, in Konzentrationen von 0.1 bis 0,5 Gew.-%, bezogen auf das Fungizid, enthalten.

Die folgenden Beispiele sollen den Gegenstand der Erfindung näher erläutern, ohne ihn darauf einzuschränken.

### Beispiele

### Beispiel 1, Vergleichsbeispiele 1 bis 5:

In einem 100-ml-Rundkolben wurden 10 g 2,4,5,6-Tetrachloroisophthalodinitril (TCIPDN,) vorgelegt und bei Raumtemperatur mit 90 g organischem Lösungsmittel versetzt. Die Lösung wurde 1 min gerührt und sofort bewertet. Im Anschluß wurde die Lösung auf 0°C abgekühlt, wieder 1 min gerührt und abermals sofort bewertet. Die Ergebnisse sind in Tab.1 zusammengefaßt.

**Tab.1**

| 10 gew.-%ige Lösungen von TCIPDN | | | |
|---|---|---|---|
| Bsp. | organisches Lösungsmittel | Bewertung bei 20°C | Bewertung bei 0°C |
| 1 | 1,3-Dimethyl-1,2-imidazolidinon (DMI)* | klare Lösung | klare Lösung |
| V1 | N-Methylpyrrolidon (NMP) | trübe Lösung Bodensatz | trübe Lösung Bodensatz |
| V2 | Dimethylformamid (DMF) | trübe Lösung Bodensatz | trübe Lösung Bodensatz |
| V3 | Dimethylsulfoxid (DMSO) | trübe Lösung Bodensatz | trübe Lösung Bodensatz |
| V4 | Tetrahydrofuran (THF) | trübe Lösung Bodensatz | trübe Lösung Bodensatz |
| V5 | Xylol | trübe Lösung Bodensatz | trübe Lösung Bodensatz |

| | | | |
|---|---|---|---|
| * Hersteller: Kawaken Fine Chemicals Co. Ltd., Aldrich CAS-Nr. 80-73-9 | | | |

Nach längerem Stehen klarten die Lösungen der Vergleichsbeispiele V1 bis V5 unter Zunahme des Bodensatzes auf.

## Patentansprüche

1. Fungizide Wirkstofflösung, enthaltend
5 bis 12 Gew.-% 2,4,5,6-Tetrachloroisophthalodinitril und
88 bis 95 Gew.-% 1,3-Dimethyl-1,2-imidazolidinon.

2. Verfahren zur Herstellung einer fungiziden Wirkstofflösung, **dadurch gekennzeichnet**, daß man 5 bis 12 Gew.-% 2,4,5,6-Tetrachloroisophthalodinitril in 88 bis 95 Gew.-% 1,3-Dimethyl-1,2-imidazolidinon löst.

3. Verwendung von fungiziden Wirkstofflösungen enthaltend 5 bis 12 Gew.-% 2,4,5,6- Tetrachloroisophthalodinitril und 88 bis 95 Gew.-% 1,3-Dimethyl-1,2-imidazolidinon als Fungizid zum Schutz von Farb- oder Lackanstrichen vor Pilzbefall.

## Claims

1. A fungicidal solution containing
5 to 12% by weight 2,4,5,6-tetrachloroisophthalodinitrile and
88 to 95% by weight 1,3-dimethyl-1,2-imidazolidinone.

2. A process for the production of a fungicidal solution, **characterized in that** 5 to 12% by weight 2,4,5,6-tetrachloroisophthalodinitrile is dissolved in 88 to 95% by weight 1,3-dimethyl-1,2-imidazolidinone.

3. The use of fungicidal solutions containing 5 to 12% by weight 2,4,5,6-tetrachloroisophthalodinitrile and 88 to 95% by weight 1,3-dimethyl-1,2-imidazolidinone as a fungicide for protecting paints and lacquers against fungal contamination.

## Revendications

1. Solution de principe actif fongicide contenant 5 à 12 % en poids de 2,4,5,6-tétrachloroisophtalodinitrile et 88 à 95 % en poids de 1,3-diméthyl-1,2-imidazolidinone.

2. Procédé de préparation d'une solution de principe actif fongicide, caractérisé en ce qu'on dissout de 5 à 12 % en poids de 2,4,5,6-tétrachloroisophtalodinitrile et 88 à 95 % en poids de 1,3-diméthyl-1,2-imidazolidinone.

3. Utilisation de solutions de principe actif fongicide contenant 5 à 12 % en poids de 2,4,5,6-tétrachloroisophtalodinitrile et 88 à 95 % en poids de 1,3-diméthyl-1,2-imidazolidinone comme fongicide pour protéger des revêtements de peintures et vernis de l'attaque des champignons.
